# EUROPEAN PATENT APPLICATION

(11) **EP 2 982 892 A1**
(43) Date of publication of application: **10.02.2016**
(21) Application number: 15179666.1
(22) Date of filing: 04.08.2015
(51) Int. Cl.: F16L 27/08, F24D 19/00, F28F 9/26

(54) **ECCENTRIC ELEMENT, LOCKING RING AND SYSTEM**

(30) Priority: 04.08.2014 IT MI20141426; 04.08.2014 DE 202014103602 U
(71) Applicant: DL RADIATORS S.p.A., 31100 Treviso (IT)
(72) Inventor: Speranzon, Renato, 31100 Treviso (IT)
(74) Representative: Hoffmann Eitle

(57) **Abstract**

There is described an element (10) configured to couple a first part to a second part which is eccentric relative to the first part. The element comprises a first portion (11) which includes a first cavity (12) provided, along a longitudinal axis (0c) of the element, with a first outer end (13) and a first inner end (14), the first outer end being suitable for coupling with the first part. Furthermore, the element comprises a second portion (15) which includes a second cavity (16) provided, along the longitudinal axis (0c), with a second outer end (17) and a second inner end (18), the second outer end being suitable for coupling with the second part; the first and second portions each comprising a respective outer surface (S1, S2) in a radial direction, wherein the first cavity is axially offset relative to the second cavity. Moreover, it is envisaged that the outer surface of the first portion of the element is coaxial or concentric relative to the outer surface of the second portion, and the first inner end is at least partially opposed to the second inner end.

## Description

### FIELD OF THE INVENTION

The present invention relates to an element configured to couple a first part to a second part which is eccentric relative to the first part, a locking ring and a system.

### BACKGROUND OF THE INVENTION

The prior art has up to now envisaged the use of eccentric fittings/reducers for various applications in the thermohydraulic sector, i.e. both on sanitary systems and heating systems, as a means for compensating for different centre-to-centre distances between two or more threaded elements to be connected together.

Commercially available eccentric accessories are in most cases obtained by casting or stamping, and have non-compact shapes and sizes. This characteristic is common to models with a smaller compensation in terms of distances covered and models covering larger axial offsets.

All eccentric elements are in fact generally identifiable by and associated with a common configuration characterized by three fundamental parts, namely: a lateral threaded part, a second threaded part opposed to the first (of the same or different shape and size), and a third central part which serves as a core/hub connecting the first two. In many cases, this third part has the shape of a veritable hexagonal nut, configured for tightening the component itself in the threads.

None of these fittings is endowed with a special gasket integrated in the intermediate area of the thread. Some have an O-Ring, others flat gaskets, whereas on all others a watertight seal is assured by applying hemp or Teflon packing on the thread. In each of the aforementioned existing cases, with the use of gaskets, there is a limit in the orientation of the axes, which is random relative to the closure with a watertight seal by compression of the gaskets.

Moreover, the locking rings presently available on the market generally consist of a ring with an internal thread. However, as recognized by the inventors, the known locking rings do not have specific configurations such as to be coupled with eccentric fittings, and are likewise not compact, especially when coupled with eccentric fittings.

### SUMMARY OF THE INVENTION

The present invention has the aim of overcoming the problems observed by the inventors in the prior art. Among them, the aim of providing an eccentric element that connects two external elements to each other and makes it possible to obtain a certain amount of axial offset between the two elements, while maintaining the eccentric object compact. The present invention has the further aim of providing a locking ring which makes it possible to obtain a better coupling with an eccentric fitting, and a system of eccentric elements that is more compact than the known ones.

A first aspect of the invention envisages an element configured to couple a first part to a second part which is eccentric relative to the first part. The element comprises a first portion which includes a first cavity provided, along a longitudinal axis of the element, with a first outer end and a first inner end, the first outer end being suitable for coupling with the first part.

Moreover, the element comprises a second portion which includes a second cavity provided, along the longitudinal axis, with a second outer end and a second inner end, the second outer end being suitable for coupling with the second part; the first and second portions each comprising a respective outer surface in a radial direction, wherein the first cavity is axially offset relative to the second cavity. Moreover, it is envisaged that the outer surface of the first portion of the element is coaxial or concentric relative to the outer surface of the second portion, and the first inner end is at least partially opposed to the second inner end.

A second aspect of the invention envisages a locking ring, which comprises a first portion suitable for coupling with a radiator and a second portion comprising an edge and a cavity concentric with the edge and internal to the edge. The cavity is provided with an outer end and suitable for being removably fixed to an external element. Moreover, it is envisaged that the outer end of said cavity of the locking ring is provided with an abutment surface that extends between said outer end and said edge.

A third aspect of the invention envisages a system comprising an element as described above and a locking ring as described above.

A fourth aspect of the invention envisages a system comprising a locking ring as described above, wherein the external element comprises either a plug or an eccentric element.

### LIST OF FIGURES

Figure 1 illustrates a sectional view of an element configured to couple a first part to a second part which is eccentric relative to the first part according to a first embodiment.
Figure 1B illustrates a further sectional view of an element configured to couple a first part to a second part which is eccentric relative to the first part according to a first embodiment.
Figure 2 illustrates a locking ring according to a second embodiment.
Figure 3 illustrates a sectional view of the locking ring according to the second embodiment.
Figure 4 is a sectional view of a system according to one embodiment of the present invention.
Figure 5 shows side views of a system according to further embodiments of the present invention.
Figure 6 illustrates an exploded view of a system according to one embodiment of the present invention.
Figure 7 illustrates an example of a system according to a further embodiment.
Figure 8 illustrates a front view and an exploded view of a locking ring coupled with a plug.

### DETAILED DESCRIPTION

The realization of a compact eccentric element and a locking ring provided internally with an abutment surface is relevant in consideration of various technical problems.

The inventors studied a possibility of obtaining an eccentric element that provides a certain axial offset between two elements to be connected together in such a way that this element is compact and if possible without the offset being visible from the outside, or if possible not easily distinguishable. The two elements to be connected can be two threaded elements belonging to two devices to be interconnected (for example, a radiator and a pipe). The value of the axial offset can be defined as of medium and/or small entity in order to permit certain couplings, such as, for example, the connection of radiators to the heating system.

The application of the eccentric element makes it possible to apply numerous variants to the centre-to-centre distance of a standard radiator, making it easily adaptable to different installation situations, especially in the case of replacements of radiators also belonging to different product categories (for example, cast iron, DIN aluminium, lamellar, etc.).

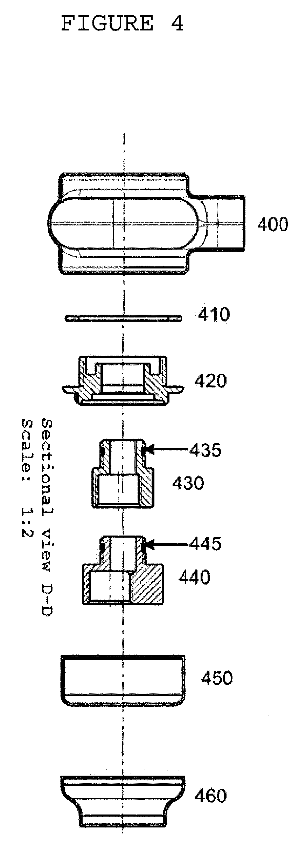

What is more, eccentric elements with different types of axial offsets can be optionally coupled with the same external element, for example a cap, as illustrated by way of example in figures 4, 5 and/or 6 and as also explained further below.

Moreover, once screwed onto the two ends, the eccentric element can appear as a cylindrical locking ring, thanks to the fact that the body of the part can be composed, for example, of only two cylindrical parts (practically perfectly) externally aligned with each other along their axis, one of which actually disappears from view once screwed into the thread.

The inventors also studied the possibility of obtaining a locking ring provided internally with an abutment surface. This locking ring is capable of being integrated in a compact manner with an external element such as, for example, the eccentric element. This particular integration makes the area of contact between the two elements non-visible and absorbs any air spaces deriving from maintaining the positioning of the axes. What is more, this internal abutment surface enables an external element to be perfectly integrated; examples of external elements are eccentric elements, valves, lockshields, bleed valves, drain valves and plugs.

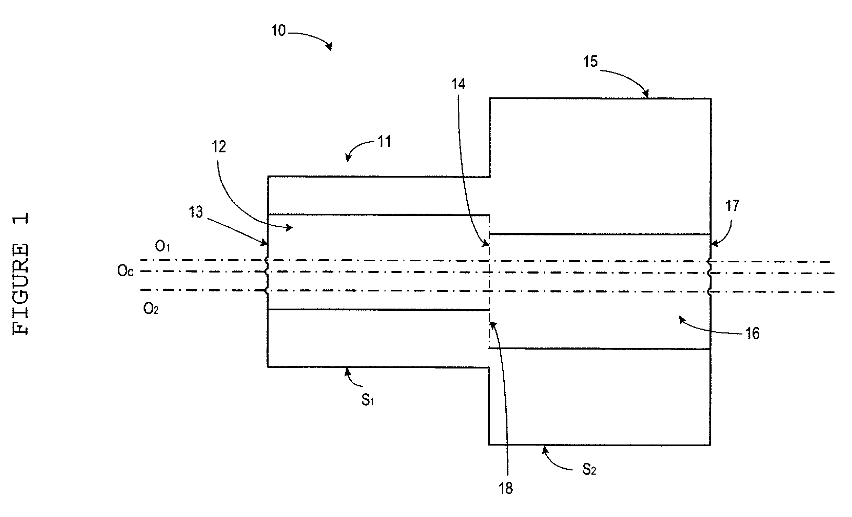

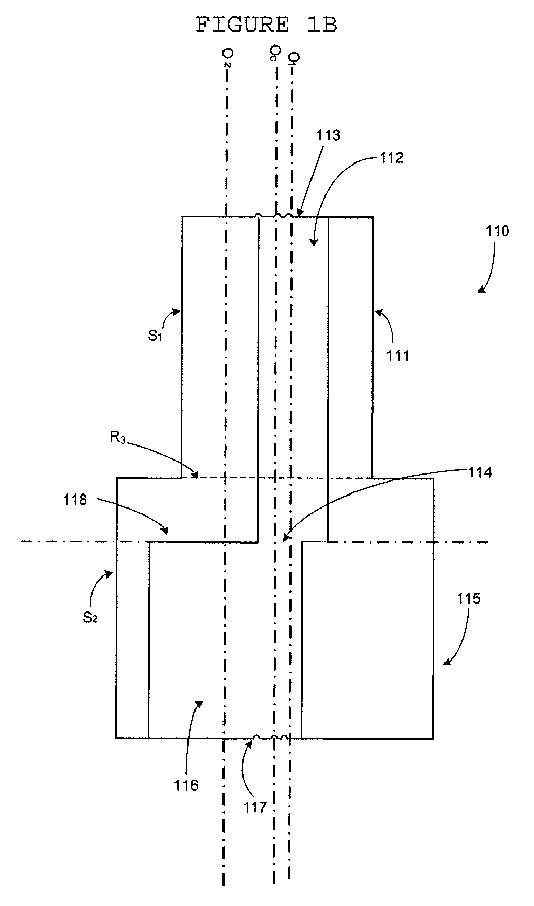

With reference to figure 1, a first embodiment of the invention is described, relating to an element 10 configured to couple a first part to a second part which is eccentric relative to the first part. Coupling the two parts can comprise joining the two parts; for example, the two parts can be screwed or pressed together.

The element comprises a first portion 11 which includes a first cavity 12. Such first cavity is provided with a first outer end 13 and a first inner end 14. Such first outer end and first inner end are provided along a longitudinal axis Oc of the element. The direction of this axis coincides with that of the axis of the eccentric element. The first end is suitable for coupling with the first part. The first part can be, for example, a locking ring or a first outlet of a plumbing system or a radiator.

The element further comprises a second portion 15 which includes a second cavity provided, along the longitudinal axis Oc, with a second outer end 17 and a second inner end 18. The second outer end is suitable for coupling with the second part. The second part can be for example a cap, or a radiator or an outlet of a plumbing system. The first and second portions each comprise a respective outer surface, S1 and S2, in a radial direction. Moreover, the first cavity is axially offset relative to the second cavity, that is, the first portion is characterised by an axis O1 and the second by an axis 02, where either O1 or 02 can coincide (but not necessarily) with Oc, but O1 and 02 do not coincide with each other, given the definition of eccentric.

The element is characterized in that the outer surface of the first portion S1 is coaxial or concentric relative to the outer surface of the second portion S2. For example, the surface can be a circle, a pentagon, hexagon or any other geometric shape that is symmetrical relative to the axis Oc or to a plane passing through the axis Oc.

Moreover, the element is characterized in that the first inner end is at least partially opposed to, in the sense of corresponding or being contiguous or adjacent (synonyms in the meaning of the present invention, as can also be deduced from the illustrations) to the second inner end. That is, the first outer end 14 is facing or directly communicating with, that is, without other interposed parts, the second inner end 18, at least for a part of the respective surfaces 14 and 18. This allows the passage, for example, of a liquid and/or gas across the opposing part of the two communicating surfaces 14 and 18. Moreover, in the case where the first inner end and the second inner end correspond only in part, it will be possible to obtain a wide range of values of offset between the two parts, while maintaining the object compact at the same time.

Figure 1B illustrates, by way of example, that the axial offset provided by the element can be of a large extent, as also shown by the element 440 of figure 4. In particular, it can be seen from Figure 1B that the second cavity 116 is shifted (or translated) relative to the first portion 111 in the sense that the second outer end 118 extends beyond the surface R3 which represents the area (directed towards the communicating surfaces) of the base of the solid having S1 as its outer surface. It can also be said that the second outer end 118 extends beyond the surface R3 which represents the area subtended by the outer surface S1 of the first portion.

As a result, the eccentric element thus constituted has a compact form. It is in fact made up of only two portions. Moreover, the outer surfaces of these portions are concentric. The cavities of the two portions are axially offset and this makes it possible to obtain a certain amount of axial offset between the two outer parts coupled by the eccentric element.

According to a modification of the first embodiment, the outer surface of the first portion can have the same centre of symmetry as the outer surface of the second portion. Among other things, this makes it possible, as will also be seen further below, to couple the eccentric element with external elements such as a locking ring, so that part of the eccentric element can disappear from view, in part or (almost) entirely, once the coupling has been made.

Moreover, according to another modification of the first embodiment, the first portion can have a circular outer section and can be provided with a thread on the outer surface suitable for being fitted with a gasket. The gasket thus provided on the outer surface can make it possible not to have a limit of mechanical abutment to assure a watertight seal in the positioning phase, thus allowing maximum freedom in the choice of the centre-to-centre distance and ensuring the desired positioning in any case whatsoever. For example, by choosing a gasket that is not integrated in abutment contact, as illustrated further below with reference to figure 4, it is possible to ensure a seal without having to screw in the element entirely (precisely because there is no need to come into abutment); moreover, thanks to the construction without a connecting hub, a seal can be assured without the constraints on coaxiality imposed by the known three-part systems (see discussion on the known eccentric fittings). In this context, the integrated gasket can be replaced by hemp packing.

According to a variant of the first embodiment, the outer surface of the second portion is optionally an at least partially faceted surface. The facets of the outer surface can enable easier screwing of the element.

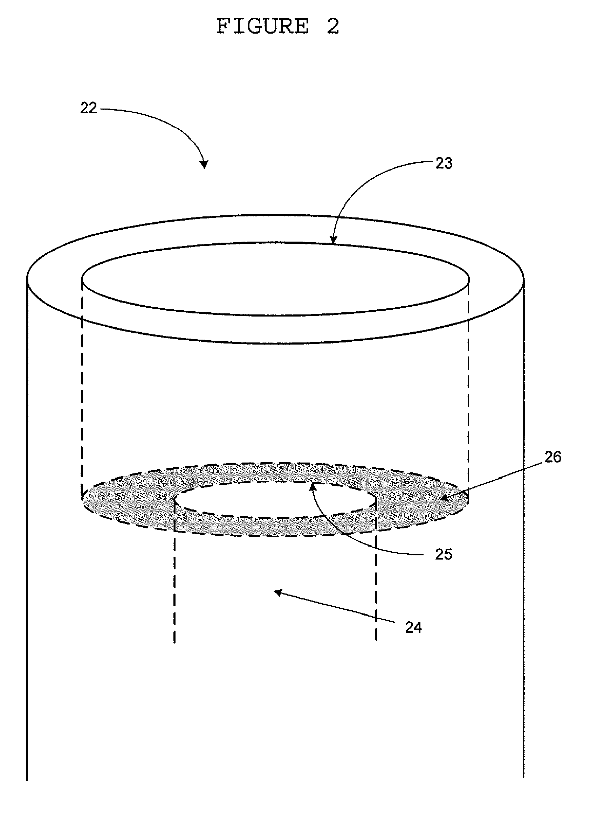

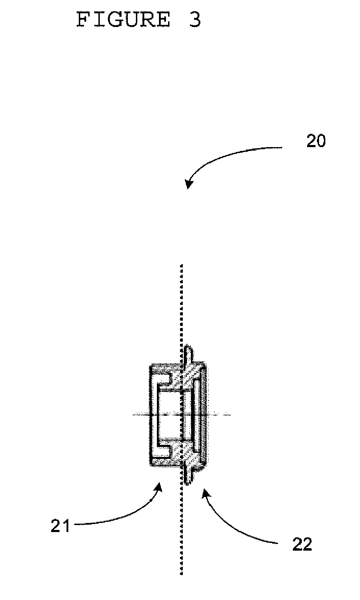

A second embodiment will be described below with reference to figures 2 and 3, in which a locking ring is represented. The locking ring comprises a first portion 21 suitable for coupling with a radiator, and a second portion 22 comprising an edge 23 and a cavity 24 concentric with the edge and internal to the edge. The cavity is provided with an outer end 25, i.e. an end that is external relative to a longitudinal axis of the locking ring. The cavity is moreover suitable for being removably fixed to an external element. For example, the cavity can be fitted or secured by means of a thread or by pressing. The external element can be an eccentric element. In such a case, the longitudinal axis of the locking ring can coincide with the longitudinal axis Oc of the eccentric element. Other examples of external elements are valves, lockshields, bleed valves, drain valves and caps.

The locking ring is further characterized in that the outer end of said cavity is provided with an abutment surface 26 that extends between said outer end and said edge. The abutment surface can be perpendicular to the two surfaces it joins, or inclined. The abutment surface therefore represents a surface (as said, vertical or oblique) that joins the two surfaces 23 and 26 and penetrates into the surface 23 (i.e. the inner surface of the edge) for a depth equal (or nearly equal), for example, to the length of one of the two parts of an eccentric element which it can receive. Thanks to the construction of the abutment surface which joins the surfaces 23 and 25 and is recessed relative to the outer part of the locking ring, it is possible to couple an eccentric element without the latter protruding at all (if the depth is such as to compensate for the length of the corresponding part of the eccentric element) or to a reduced extent.

According to a modification of the second embodiment, the edge has a length along a longitudinal axis Oc of the locking ring equivalent to at least a portion of a thread of said external element or at least a portion of the length along said longitudinal axis of said external element.

Such structure of the locking ring enables an integration thereof with the external element such as to make the area of close contact between the two elements non-visible and absorb any air spaces deriving from maintaining the desired positioning of the axes.

According to a third embodiment, the present invention further envisages a system comprising an element 10 according to the first embodiment described above and a locking ring 20 according to the second embodiment described above.

According to a modification of the third embodiment, the element is suitable for coupling with a cap. The cap enables the coupled parts to be concealed, resulting in a more compact system. Moreover, if it is desired to produce a series of eccentric fittings to compensate for different eccentricities, it will be possible to modify only the first part 11 (i.e. the axis O1), whilst leaving the axis O1 and the outer surface S2 unchanged (the same applies if the first part 11 and the second part 16 of the eccentric element are inverted): in such a case, it will be possible to use the same cap for all the eccentric elements of the series.

According to a variant of the third embodiment, the system comprises a locking ring 20 as described in the second embodiment, where the external element consists of either a plug or an eccentric element.

According to a further variant of the third embodiment, the system comprises a locking ring 20 as described in the second embodiment and an element 10 as described in the first embodiment or one of the above-described variants.

A further technical advantage of the present invention consists in the reduction of the number of radiator heights, since it is possible to have numerous different alternative centre-to-centre distances, the radiator height being equal.

It is moreover possible to harmonize the various models of radiators and the variables in the connection thereof to the system.

What is more, it is possible to cover, with a final cap of varying shapes, not only the individual component, be it an eccentric element or a commercial accessory, but also the two coupled components, locking ring and eccentric element or commercial accessory, thanks to appropriately configured seats.

Figure 4 shows a sectional view of an example of a system according to the present invention, in which the following are represented: a radiator 400, a gasket 410, a locking ring 420, a first eccentric element 430, a second eccentric element 440, and a system of caps 450 and 460. It should be noted that this is only an explanatory configuration, and that the whole set of components is not necessary. For example, the locking ring or the cap can be omitted, just as one of the two eccentric elements can be omitted. If two eccentric elements are used as illustrated in the figure, for example in order to obtain an axial offset not obtainable by means of only one of such elements, it is still possible to obtain a compact combination of eccentric elements: in fact, the first part of the eccentric element 440 (the one drawn on the left with the gasket 445) can be inserted completely (or nearly or in large part) in the corresponding part of the eccentric element 430 (i.e. in the part without the gasket 435) so that part of the eccentric element 440 disappears from view inside the coupling. The combination thus obtained proves to be compact. The radiator 400 is an example of the element to which the eccentric element can be coupled by means of the locking ring or directly. The invention is not limited, however, to coupling with a radiator, as the eccentric element can likewise couple, for example, two axially offset outlets.

It should be noted that the eccentric element 440 is provided with an integrated gasket 445 in the example of figure 4. This gasket can be represented by an element made of rubber (or another material) inserted or fashioned between the thread (or at the end of the thread) in order to enable a seal when the eccentric element is screwed or pressed against the radiator or against the outlet it is coupled to. The gasket can be replaced by hemp packing. Moreover, the gasket can be provided also or alternatively on the other part of the eccentric element (not illustrated variants).

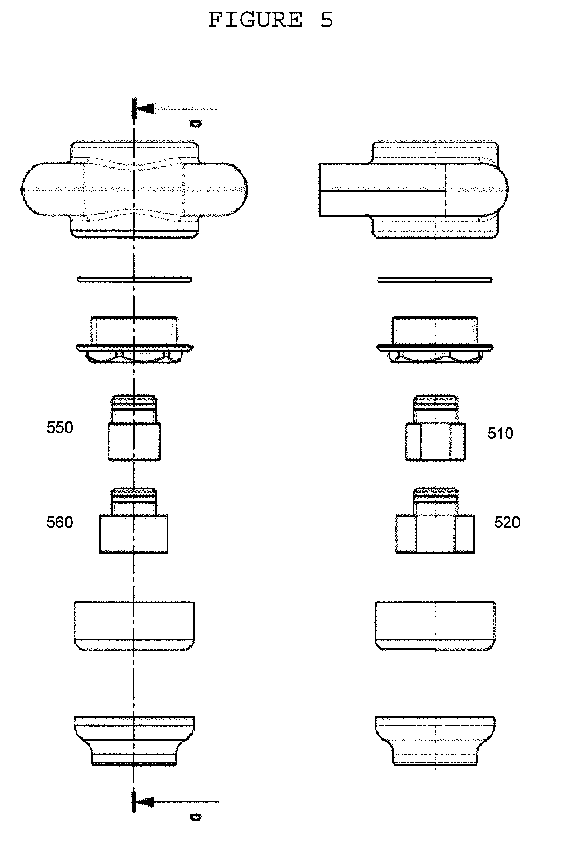

Figure 5 shows side views, in which the upper one illustrates outer faceted surfaces 510 and 520 of the eccentric elements, whereas the lower one illustrates circular surfaces 550 and 560 of the eccentric elements. As noted, the faceted surfaces (for example hexagonal, pentagonal, etc.) enable the eccentric element to be screwed or coupled more easily if the coupling is not to be achieved by pressing. It is noted that figure 4 represents the cross section DD of the side view shown at the bottom in figure 5.

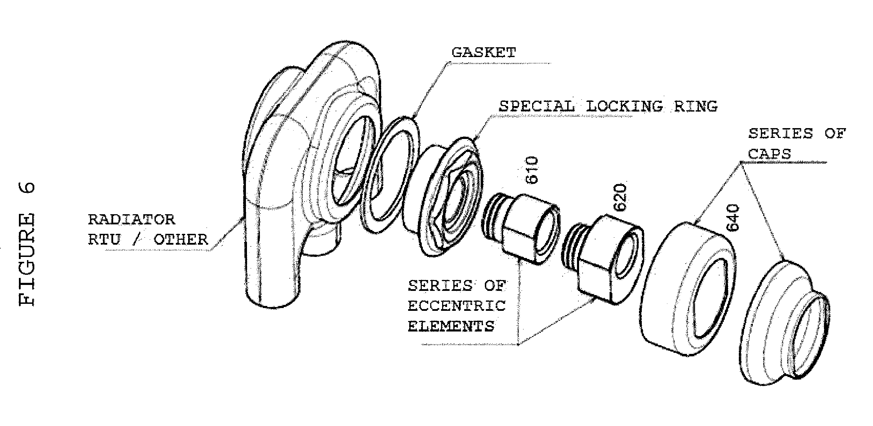

Figure 6 illustrates another example in an exploded view. Visible in this example are the outer surfaces 610 and 620 of the eccentric elements which have a faceted or (in cross section) flat portion, and a circular portion.

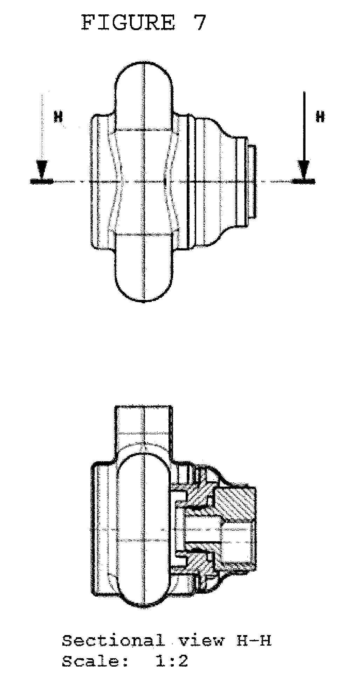

Figure 7 shows an example in which some of the parts of figure 4 (for example, one of the eccentric elements of figure 4 is present but not both) are assembled. It can be immediately recognized that the system obtained is particularly compact.

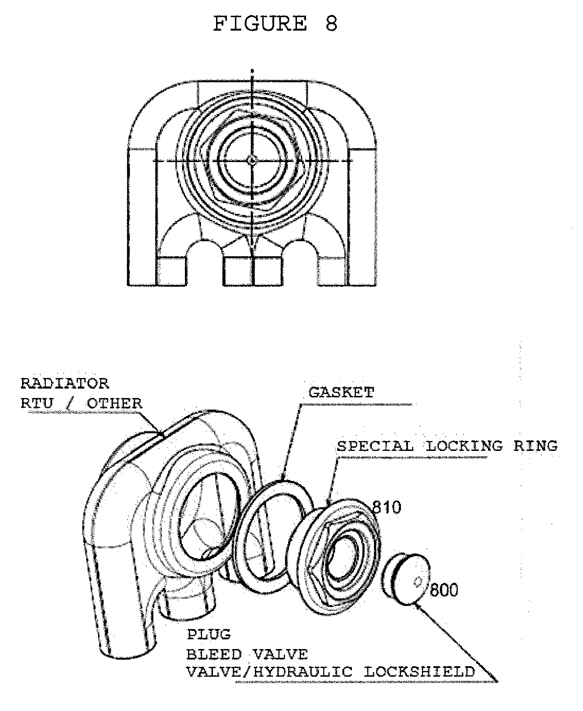

Finally, figure 8 shows an example in which the locking ring 810 is coupled with a plug 800. Here again it can be immediately recognized that the system is compact, thanks to the multifunctional abutment surface and construction of the locking ring.

Naturally, the above description of embodiments and examples applying the principles recognized by the inventors has been set forth solely for the purpose of illustrating those principles and must therefore not be intended as limiting the scope of the invention claimed herein.

## Claims

1. An element (10) configured to couple a first part to a second part which is eccentric relative to the first part, the element comprising:
a first portion (11) which includes a first cavity (12) provided, along a longitudinal axis (0c) of the element, with a first outer end (13) and a first inner end (14), the first outer end being suitable for coupling with the first part;
a second portion (15) which includes a second cavity (16) provided, along the longitudinal axis (0c), with a second outer end (17) and a second inner end (18), the second outer end being suitable for coupling with the second part; the first and second portions each comprising a respective outer surface (S1, S2) in a radial direction;
wherein the first cavity is axially offset relative to the second cavity;
the element being **characterized in that**:
the outer surface of the first portion (S1) is coaxial relative to the outer surface of the second portion (S2); and
the first inner end is at least partially opposed to the second inner end.

2. The element according to claim 1, wherein the outer surface of the first portion has the same centre of symmetry as the outer surface of the second portion.

3. The element according to claim 1 or 2, wherein at least either the first portion or the second portion has a circular external cross section and is provided on the outer surface with a thread suitable for being fitted with a gasket.

4. The element according to any one of claims 1 to 3, wherein the outer surface of the second portion is an at least partially faceted surface.

5. A locking ring (20) comprising:
a first portion (21) suitable for coupling with a radiator, and a second portion (22) comprising an edge (23) and a cavity (24) concentric with the edge and internal to the edge, the cavity being provided with an outer end (25) and suitable for being removably fixed to an external element, the locking ring being **characterized in that**:
the outer end of said cavity is provided with an abutment surface (26) which extends between said outer end and said edge.

6. The locking ring according to claim 5, wherein the edge has a length along a longitudinal axis (Oc) of the locking ring equal to at least a portion of a thread of said external element or equal to at least a portion of the length along said longitudinal axis of said external element.

7. A system comprising an element (10) according to any one of claims 1 to 4, and a locking ring (20) according to claim 5 or 6.

8. The system according to claim 6, wherein the element is suitable for coupling with a cap.

9. A system comprising a locking ring (20) according to claim 5 or 6, wherein the external element comprises either a plug or an eccentric element.

10. A system comprising an element (10) according to claim 3, and a gasket provided at said thread.
